# EUROPEAN PATENT SPECIFICATION

(11) **EP 3 039 600 B1**
(45) Date of publication and mention of the grant of the patent: **06.02.2019**
(21) Application number: 14767085.5
(22) Date of filing: 24.07.2014
(51) Int. Cl.: G06F 21/31, G06K 9/00, G06K 9/62

(54) **POSE AND SUB-POSE CLUSTERING-BASED IDENTIFICATION OF INDIVIDUALS**
IDENTIFIZIERUNG VON PERSONEN AUF BASIS VON HALTUNGS- UND SUBHALTUNGSGRUPPIERUNG
IDENTIFICATION D'INDIVIDUS À BASE DE REGROUPEMENT DE POSES ET DE SOUS-POSES

(30) Priority: 27.08.2013 IN 2795MU2013
(43) Date of publication of application: 06.07.2016
(73) Proprietor: Tata Consultancy Services Limited, Mumbai 400021 (IN)
(72) Inventor: SINHA, Aniruddha, Kolkata 700091 (IN); CHAKRAVARTY, Kingshuk, Kolkata 700091 (IN)
(74) Representative: Goddar, Heinz J.
(86) International application number: PCT/IB2014/001377
(87) International publication number: WO 2015/028856

(56) References cited:
- WO-A1-2011/112072
- US-A1- 2004 228 503
- FABIO CUZZOLIN ET AL: "Robust Spectral 3D-Bodypart Segmentation Along Time", 20 October 2007 (2007-10-20), HUMAN MOTION - UNDERSTANDING, MODELING, CAPTURE AND ANIMATION; [LECTURE NOTES IN COMPUTER SCIENCE], SPRINGER BERLIN HEIDELBERG, BERLIN, HEIDELBERG, PAGE(S) 196 - 211, XP019081629, ISBN: 978-3-540-75702-3 abstract paragraphs [0001] - [0002] paragraph [03.1] paragraph [03.3] paragraph [0005] paragraph [0006]
- MOESLUND T B ET AL: "A survey of advances in vision-based human motion capture and analysis", COMPUTER VISION AND IMAGE UNDERSTANDING, ACADEMIC PRESS, US, vol. 104, no. 2-3, 1 November 2006 (2006-11-01), pages 90-126, XP024917692, ISSN: 1077-3142, DOI: 10.1016/J.CVIU.2006.08.002 [retrieved on 2006-11-01]
- MORRIS B ET AL: "Learning trajectory patterns by clustering: Experimental studies and comparative evaluation", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 June 2009 (2009-06-20), pages 312-319, XP031607086, ISBN: 978-1-4244-3992-8

## Description

### TECHNICAL FIELD

The present subject matter relates, in general, to identification of individuals and in particular, to identification of individuals based on pose and sub-pose clustering.

### BACKGROUND

Individuals are generally identified by recognizing the identity of the individuals through their physical and behavioral characteristics. This act of recognizing the identity of the individuals is referred to as identification of individuals or people identification. The individuals may have to be identified for a variety of purposes, such as human surveillance, security control, and people counting. In such scenarios, the individuals have to be identified distinctly and robustly with substantial efficiency and accuracy.

A prior art patent application US2004/0228503 discloses a method for identifying an ambulatory subject based on video analysis of the subject's gait. Motion based biometric of a human subject is analyzed for identifying the human subject. The gait analysis technique described herein provides different orientations of camera with respect to the subject. The method discloses acquiring a sequence of images that collectively captures the gait of the subject and determining features from the sequence of images representative of the gait. Further, the subject is identified based on the features such as cadence, stride length, and height parameters.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to refer features and components.
Figure 1 illustrates a system environment implementing a people identification system, in accordance with an implementation of the present subject matter.
Figure 2 illustrates the people identification system, in accordance with an implementation of the present subject matter.
Figure 3 illustrates a method for identification of individuals based on pose and sub-pose clustering, in accordance with an implementation of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

### DETAILED DESCRIPTION

The subject matter disclosed herein relates to system(s) and method(s) for identification of individuals based on pose and sub-pose based clustering. For the purposes of the present subject matter, identification refers to an act of establishing or recognizing people or individuals performing a step activity, such as walking, jogging, and running. The motion of the individual is related to two aspects: gait and pose. Gait is a spatiotemporal phenomenon related to walking style, or jogging style, or running style of the individual, and pose refers to a posture of the individual while performing the step activity. The pose further includes sub-postures, referred to as sub-poses.

Individuals are commonly identified automatically based on their physical and behavioral characteristics, such as voice or speech, face, iris, and fingerprint. Systems and methods for identification of individuals based on such characteristics are intrusive as they require a direct human interaction. Moreover, it is substantially difficult to extract biometric features like iris, speech, and fingerprints, from a large distance. As a result, such systems and methods fail to identify the individuals from a distance.

The identification of individuals based on their walking patterns that define gait is known. Gait-based identification is non-intrusive, as the gait features of the individuals can be captured or extracted from a relatively large distance without any direct interaction. In gait-based identification, a system is first trained with the characteristic gait features of the individuals for their distinct identification. The system is then used to identify the individuals based on their gait features captured or extracted in real-time. During the training phase, each individual is required to perform walking activity. While the individual is walking, his skeleton data is captured using a skeleton recording device or a sensor. The skeleton data is processed to extract gait features, including static and dynamic gait features. Conventionally, the systems are trained for the gait features extracted for walking patterns of individuals with predefined walking paths. During the identification of individuals in real-time, when the individual performs the walking activity with an arbitrary pattern in a path other than the predefined walking paths, the extraction of the gait features is error-prone and the system may give an erroneous identification result. Thus, the conventional systems are not able to identify individuals with substantial accuracy for the case when they are performing walking activity with an arbitrary pattern and following a random path.

Further, the skeleton data signals captured from a skeleton recording device may have noise. Conventional systems and methods do not consider the effect of noisy signals. The noise in the signals may result in extraction of false features which may adversely affect the identification of individuals.

Further, some conventional systems and methodologies analyze silhouette shapes during motion of the individual to identify gait characteristics. The silhouette is an image of the individual depicted as an outline of that individual. Such systems and methodologies utilize representations such as motion energy image, motion history image, gait energy image, gait history image, and frame difference energy image. These representations require motion videos and silhouettes of substantially high quality which may not be available in an open and unrestricted environment. This may also result into an inaccurate identification of the individuals.

The present subject matter describes system(s) and method(s) for identification of individuals based on pose and sub-pose clustering. The systems and the methods of the present subject matter are capable of identifying individuals performing a step activity, such as walking, jogging, or running, with an arbitrary activity pattern and in an unconstrained environment. The arbitrary activity pattern may refer to a step activity pattern with any style of movement and following any path. By unconstrained environment, it may be understood that the region or the area where the individual is performing the step activity is neither predefined nor restricted.

The systems and the methods of the present subject matter are based on correlation of gait features in gait cycles with the poses and sub-poses of the individuals, which is exploited for identification of individuals distinctly. As mentioned earlier, gait is a spatio-temporal phenomenon related to motion of the individual. A gait cycle or pattern, starting with one foot forward and ending with the same foot forward, is composed of distinct poses. A pose refers to a posture of the individual, for example, in which the legs are maximum spread or are together. Each pose may have variations which can be referred to as sub-postures or sub-poses. So, the arbitrary pattern of the step activity has poses which further have sub-poses. The poses and the sub-poses may occur periodically in successive gait cycles. By correlating the gait features over multiple gait cycles with poses and subs-poses of an individual, a set of gait cycle independent features corresponding to characteristic poses and sub-poses of that individual can be obtained. This set of gait cycle independent features can then be used to identify that individual distinctly.

In an implementation, for the identification of individuals performing a step activity with an arbitrary activity pattern and in an unconstrained environment, signals containing skeleton data for multiple skeleton joints are obtained. The signals can be obtained from a skeleton recording device. These signals are generated by the skeleton recording device in the form of frames, referred to as skeleton data frames. Each of the frames is processed to extract a static feature vector and a dynamic feature vector. The static feature vector is a vector comprising multiple static gait features, and the dynamic feature vector is a vector comprising multiple dynamic gait features. In an example, the static feature vector may comprise static gait features such as height, lengths of both legs, torso, both lower legs, both thighs, both upper arms, and both forearms of the individual. In the example, the dynamic feature vector may comprise dynamic gait features such as velocity, step-length, area-related features, angle-related features, and dynamic centroid distance-related features.

In an implementation, from amongst the frames for each individual, noisy frames are identified. The noisy frames can be identified based on analysis of static feature vectors for the frames, as the mutual Euclidean distance between two skeleton joints or, in other words, between two static feature vectors for any two frames should not vary. In case the distance is more than a predefined threshold value, the frames can be understood to have noise. In an implementation, the identification of the noisy frames is based on clustering of the static feature vectors for all the frames. For this, the static feature vectors may be partitioned into two clusters using a predefined clustering method. The cluster in which points representing the static feature vectors are sparsely distributed is identified as a noisy cluster, and the frames associated with the sparsely distributed static feature vectors are referred to as the noisy frames. The noisy frames are not considered for further processing. In an implementation, the noisy frames may be removed from amongst the frames before further processing. Unlike the conventional methodologies, the identification of the noisy frames facilitates in increasing the accuracy and reliability of identification of the individuals.

Further, for each individual, after the removal of the noisy frames, a first predefined number of clusters are created based on clustering of the dynamic feature vectors extracted from the frames. The clustering can be done using a predefined clustering method. The first predefined number is indicative of number of poses that are to be identified in the arbitrary activity pattern of the individual. As mentioned earlier, the pose refers to a posture of the individual within his activity pattern. The dynamic feature vectors are clustered into poses, as the dynamic feature vectors contain most of the spatio-temporal variations within the activity pattern with respect to time. The dynamic feature vectors represented by points in one cluster are characteristic of one pose of the individual in his activity pattern. Thus, with a first predefined number of clusters, the dynamic feature vectors, and thus the frames, are segregated into the first predefined number of characteristic poses of the individual.

Further, as mentioned earlier, each distinct pose of the individual may be composed of multiple sub-poses. Thus, for each individual, a second predefined number of sub-clusters within each cluster are created based on clustering of the dynamic feature vectors for the frames associated that cluster. The clustering can be done using a predefined clustering method. The second predefined number is indicative of number of sub-poses that are to be identified in the poses. The dynamic feature vectors represented by points in one sub-cluster are characteristic of one sub-pose within a pose of the individual in his activity pattern. Thus, with a second predefined number of sub-clusters in each cluster, the dynamic feature vectors, and thus the frames, are segregated into the second predefined number times the first predefined number of characteristic sub-poses of the individual.

Once the clusters and sub-clusters of the dynamic feature vectors are created for the individual performing the step activity with the arbitrary activity pattern, a gait-pose feature data set is determined for the individual. The gait-pose feature data set is based on computation of a center of the dynamic feature vectors for the frames associated with the each of the sub-clusters. The gait-pose data set is appended with a mean of the static feature vectors for the frames associated with the each of the clusters to form an updated gait-pose feature data set.

Further, a classifier can be trained with the gait-pose feature data set determined for each of the individuals for the identification of the individuals uniquely.

The identification of individuals based on gait-pose and sub-pose correlation makes the systems and the methods of the present subject matter agnostic of the activity pattern of the individuals and the path followed while performing the step activity. Thus, the system can be trained with the gait-pose feature data set for each individual following any arbitrary activity pattern in any path, and the system can uniquely identify individuals performing a step activity with any other arbitrary activity pattern and following any path. In addition, since the noisy frames are identified and not considered for processing, the present subject matter provides a robust methodology of identifying the individuals with a substantial accuracy. Also, since the present subject matter is agnostic of activity patterns and paths following during the step activity, the systems and the methods can be implemented to identify individuals performing a step activity in an unconstrained indoor/outdoor environment.

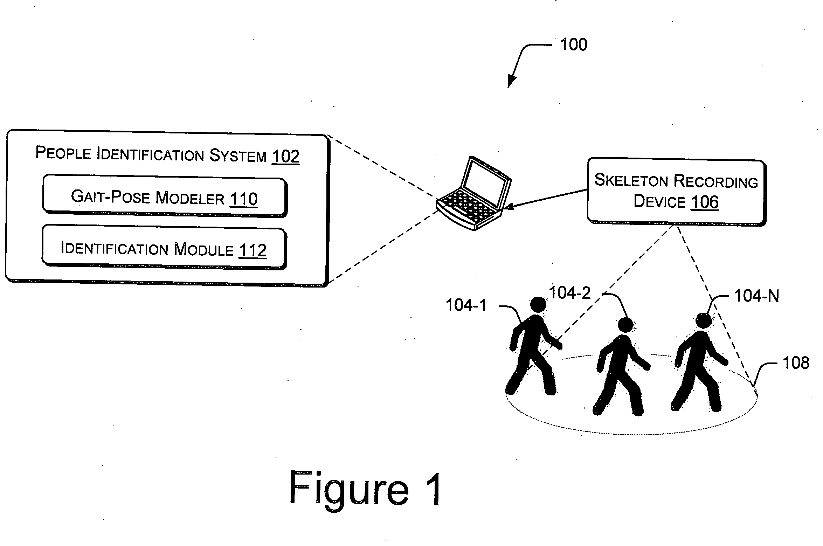

The manner in which the system(s) and method(s) shall be implemented has been explained in details with respect to Figure 1 to Figure 3. Although the description herein is with reference to laptop(s), the method(s) and system(s) may be implemented in other computing device(s) as well, albeit with a few variations, as will be understood by a person skilled in the art. While aspects of described methods can be implemented in any number of different computing devices, transmission environments, and/or configurations, the implementations are described in the context of the following computing device(s).

Figure 1 illustrates a system environment 100 implementing a people identification system 102, in accordance with an implementation of the present subject matter. For the purpose of simplicity of description, the people identification system 102 is hereinafter referred to as the system 102. The system 102 may be implemented in a variety of computing systems, such as a laptop computer, a desktop computer, a notebook, a workstation, a mainframe computer, a server, a network server, and the like. The system is enabled to identify people or individuals 104-1, 104-2, ... , 104-N, based on their walking patterns for walking activity. The walking pattern of the individual 104-1, 104-2, ... , 104-N may be arbitrary, and the individuals 104-1, 104-2, ... , 104-N may be following any walking path while performing the walking activity. The individuals 104-1, 104-2, ... , 104-N, hereinafter are collectively referred to as individuals 104, and individually referred to as an individual 104. Although the description herein is described for identification of individuals 104 based on their walking patterns for walking activity, the system 102 can be configured to identify the individuals 104 based on their activity patterns for any step activity, such as jogging, or running.

As shown in the figure, the system environment 100 includes a skeleton recording device 106 that captures skeleton data points of each individual 104 performing a walking activity with an arbitrary walking pattern and following any walking path. The skeleton recording device 106 captures the skeleton data points for a predefined time period, while the individuals 104 are within a field of view 108 of the skeleton recording device 106. The field of view 108 is an area observable by the skeleton recording device 106. The skeleton data points of the individual 104 contain information about the skeleton joints of the individual 104. In an implementation, the skeleton recording device 106 may capture data for 20 skeleton joints. After capturing the skeleton data points, the skeleton recording device 106 generates signals that may be provided to the system 102 for processing.

In an example, the skeleton recording device 106 may be a sensor, such as a Kinect sensor. The skeleton recording device 106 may be fixed or rotating. The rotating skeleton recording device provides a wider field of view and facilitates in capturing the walking activity of the individual 104 over a wider area.

In an implementation, the system 102 comprises a gait-pose modeler 110 and an identification module 112. The signals received by the system 102 from the skeleton recording device 106 are processed to extract multiple static and dynamic gait features from the signals for each individual 104. The gait-pose modeler 110 obtains the gait features in the form of vectors, and, for each individual 104, creates a predefined number of clusters for the gait feature vectors. These clusters are characteristics of poses that can be identified in the walking pattern of the individual 104. The gait-pose modeler 110 creates another predefined number of sub-clusters for the gait feature vectors associated with each of the clusters. The sub-clusters within each cluster are characteristics of sub-poses that can be identified in the corresponding pose of the individual 104. Based on the clustering of the gait feature vectors, the gait-pose modeler 110 determines a gait-pose feature data set which is used by the identification module 112 for training a classifier and subsequent identification of the individuals 104 uniquely.

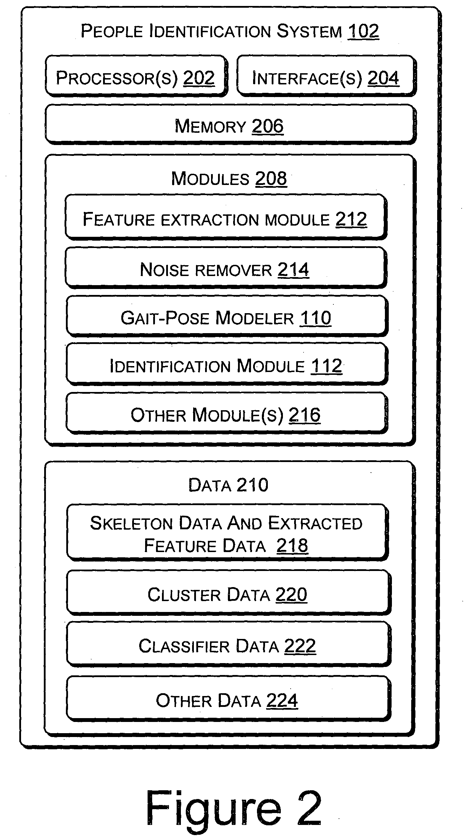

Figure 2 illustrates the people identification system 102, in accordance with an implementation of the present subject matter. In an implementation, the system 102 includes processor(s) 202. The processor(s) 202 may be implemented as one or more microprocessors, microcomputers, microcontrollers, digital signal processors, central processing units, state machines, logic circuitries, and/or any devices that manipulate signals based on operational instructions. Among other capabilities, the processor(s) 202 is configured to fetch and execute computer-readable instructions stored in a memory.

The system 102 includes interface(s) 204. The interfaces may include a variety of machine readable instruction-based and hardware-based interfaces that allow the system 102 to communicate with other devices, including servers, data sources and external repositories. Further, the interface(s) 204 may enable the system 102 to communicate with other communication devices, such as network entities, over a communication network.

Further, the system 102 includes a memory 206. The memory 206 may be coupled to the processor(s) 202. The memory 206 can include any computer-readable medium known in the art including, for example, volatile memory, such as static random access memory (SRAM) and dynamic random access memory (DRAM), and/or non-volatile memory, such as read only memory (ROM), erasable read only memory (ROM), erasable programmable ROM, flash memories, hard disks, optical disks, and magnetic tapes.

Further, the system 102 includes module(s) 208 and data 210. The module(s) 208 and the data 210 may be coupled to the processor(s) 202. The modules 208, amongst other things, include routines, programs, objects, components, data structures, etc., which perform particular tasks or implement particular abstract data types. The modules 208 may also be implemented as, signal processor(s), state machine(s), logic circuitries, and /or any other device or component that manipulate signals based on operational instructions. The data 210 serves, amongst other things, as a repository for storing data that may be fetched, processed, received, or generated by the module(s) 208. Although the data is shown internal to the mobile device, it may be understood that the data 210 can reside in an external repository (not shown in the Figure), which may be coupled to the system 102. The system 102 may communicate with the external repository through the interface(s) 204.

Further, the module(s) 208 can be implemented in hardware, instructions executed by a processing unit, or by a combination thereof. The processing unit can comprise a computer, a processor, a state machine, a logic array or any other suitable devices capable of processing instructions. The processing unit can be a general-purpose processor which executes instructions to cause the general-purpose processor to perform the required tasks or, the processing unit can be dedicated to perform the required functions. In another aspect of the present subject matter, the module(s) 208 may be machine-readable instructions which, when executed by a processor/processing unit, perform any of the desired functionalities. The machine-readable instructions may be stored on an electronic memory device, hard disk, optical disk or other machine-readable storage medium or non-transitory medium. In an implementation, the machine-readable instructions can also be downloaded to the storage medium via a network connection.

In an implementation, the module(s) 208 include a feature extraction module 212, a noise remover 214, the gait-pose modeler 110, the identification module 112 and other module(s) 216. The other module(s) 216 may include programs or coded instructions that supplement applications or functions performed by the system 102. In said implementation, the data 210 includes skeleton data and extracted feature data 218, cluster data 220, classifier data 222 and other data 224. The other data 224 amongst other things, may serve as a repository for storing data that is processed, received, or generated as a result of the execution of one or more modules in the module(s) 208.

The following description describes the procedure of identification of individuals 104 based on pose and sub-pose clustering by the system 102. The procedure is described for one individual performing a walking activity and can be carried out in a similar manner for multiple individuals performing any step activity.

As described earlier, the skeleton recording device 106 captures the skeleton data points of the individual 104 performing the walking activity with an arbitrary walking pattern and following any walking path within the field of view 108 of the skeleton recording device 106. The skeleton recording device 106 captures the data over a predefined period and generates signals based on the captured skeleton data points. The skeleton data points provide information about gait of the individual 104. The predefined time period is such that the complete walking pattern of the individual 104 is captured. The system 102 receives the signals from the skeleton recording device 106 in the form of skeleton data frames comprising skeleton data points of the individual 104. In an example, the predefined time period, for which the data of the individual 104 is captured, is such that the skeleton recording device 106 generates signals to provide 3000 skeleton data frames to the system 102. The system 102 receives 3000 skeleton data frames, for further processing, from skeleton recording device 106. For the sake of simplicity of the specification, the skeleton data frames hereinafter are referred to as frames. Let the frames be denoted by f1, f2, f3, ... , f3000.

Based on the frames received by the system 102, the feature extraction module 212 extracts a static feature vector and a dynamic feature vector from each of the frames. In an implementation, the static feature vector includes static gait features including, but not limited to, height, length of both legs, torso, both lower legs, both thighs, both upper arms, and both forearms of the individual. In the implementation, the dynamic feature vector includes dynamic gait features including, but not limited to, velocity, step length, area-related features, angle-related features, and dynamic centroid distance-related features.

The area-related features may include, but are not limited to, mean of area occupied by upper body portion and mean of area occupied by lower body portion of the individual. The angle-related features may include, but are not limited to, angle of upper left leg relative to vertical axis, angle between left foot relative to horizontal axis, angle of lower left leg relative to the upper left leg, angle of upper right leg relative to the vertical axis, angle of right foot relative to the horizontal axis, and angle of lower right leg relative to the upper right leg. The dynamic centroid-distance related features may include, but are not limited to, distance between centroid of body and centroids of right hand, left hand, right leg, and left leg.

The values of the static gait features from each frame form the static feature vector for the frame, and the values of the dynamic gait features from each frame form the dynamic feature vector for the frame. The data related to the skeleton data points, the static feature vector, and the dynamic feature vector are stored in the skeleton data and extracted features data 218.

In an example, the static feature vector includes 12 static gait features and the dynamic feature vector includes 14 dynamic gait features. Let the static feature vector for each frame be denoted by a 12-dimensional vector of 12 elements [ds1... ds12], and the dynamic feature vector for each frame be denoted by a 14-dimensional vector of 14 elements [df1... df14]. So, for all the frames from f1 to f3000, there are 3000 static feature vectors and 3000 dynamic feature vectors. The extracted static and dynamic feature vectors for all the frames f1 to f3000 can be represented by a two-dimensional (2-D) matrix of order of [3000 x (14+12)].

The skeleton data points captured by the skeleton recording device 106 may include noise owing to, for example, the limitation of the skeleton recording device 106. This noise is included in the frames f1 to f3000, and hence in the static and dynamic feature vectors extracted therefrom. The noise remover 214 detects the noisy frames, from amongst all the frames, based on variations in the static feature vectors extracted from the frames f1 to f3000. The static feature vectors have values corresponding to distances between skeleton joints of the individual 104 and therefore, should not vary with time. If this distance varies substantially from one frame to another frame, then the static feature vectors have noise therein. In the other words, the frames containing those static features are noisy.

For this, in an implementation, the noise remover 214 clusters the static feature vectors of the frames f1 to f3000 into two clusters. In the context of the present subject matter, a cluster formed by the noise remover 214 includes points, where each point represents one static feature vector in a multi-dimensional space. The distribution of points in such a cluster is indicative of the distribution and variation of static feature vectors for the individual 104. Initially the absolute differences of static feature vectors of successive frames are computed. Histogram analysis is done for the values of the absolute differences to populate counts in predefined bins. The static feature data point corresponding to the center of the bin having maximum count is taken as the first starting center. The second starting center is the data point which is at a farthest distance from the first starting center. These two starting centers are considered as initial cluster centers for a 2-cluster clustering method performed for the static feature vectors. After the 2-cluster clustering method is performed two clusters with their cluster centers are obtained. The data points associated with the final location of the cluster center of one of the clusters are good data, and the data points associated with the final location of the cluster center of the other cluster correspond to the noisy data. It is observed that the cluster with the noisy data has sparsely distributed data points representing the static feature vectors having noise. The frames corresponding to those static feature vectors are referred to as noisy frames. The noisy frames are not considered for further processing in the system 102.

In an implementation, the noise remover 214 removes the noisy frames from the frames f1 to f3000, thereby reducing the number of frames for further processing. The removal of noisy frames is understood as the removal of static and dynamic feature vectors corresponding to the noisy frames from the 2-D matrix of order [3000 x (14+12)]. Let there be 500 noisy frames. Let the remaining 2500 skeleton data frames be denoted by f1, f2, f3, ... , f2500. The static gait features and the dynamic gait features for the reduced number of frames f1 to f2500 can be represented by a 2-D matrix of order of [2500 x (14+12)]. After the removal of the noisy frames and the corresponding feature vectors, the static and dynamic feature vectors for the remaining frames f1 to f2500 are processed by the gait-pose modeler 110 for gait-pose and sub-pose modeling.

For the gait-pose and sub-pose modeling, the gait-pose modeler 110 creates a first predefined number of clusters of the dynamic feature vectors for the frames f1 to f2500.The first predefined number of clusters is a number of poses to be identified in the walking activity of the individual 104. In an implementation, the first predefined number may range from 2 to 10.

Let us consider an example, where the number of poses to be identified is 3. The gait-pose modeler 110 performs K-means clustering method over the dynamic feature vectors for the frames f1 to f2500 for creating three clusters. The gait-pose modeler 110 randomly selects three dynamic feature vectors, amongst all the dynamic feature vectors, as the starting centers, and computes the Euclidean distances of the remaining dynamic feature vectors from each of these three starting centers. Based on the distances, the gait-pose modeler 110 creates clusters around each of the three starting centers, such that each cluster has points, in a multi-dimensional space, representing the dynamic feature vectors that are closer to the starting center of that cluster. The gait-pose modeler 110 then modifies the starting centers by computing a revised center of each of the three clusters. Based on the modified starting centers, the gait-pose modeler 110 again creates clusters around each of the three modified centers in manner described above. The gait-pose modeler 110 continuously modifies the starting centers for the three clusters and creates revised clusters around the modified centers until the starting centers stop changing. With this, three clusters are obtained, where each cluster has points representing segregated dynamic feature vectors. The dynamic feature vectors for each cluster correspond to one pose that can be identified in the walking pattern of the individual 104. In an implementation, the clustering may be performed through any clustering method including, but not restricted to, K-means or Fuzzy C-means clustering method.

Now, as mentioned earlier, each pose of the individual 104 may have variations which can represent sub-poses in the walking pattern. The dynamic feature vectors for the frames associated with each cluster are processed separately by the gait-pose modeler 110 for pose-sub-pose modeling. For the pose-sub-pose modeling, the gait-pose modeler 110 creates a second predefined number of sub-clusters of the dynamic feature vectors for the frames associated with each cluster. The second predefined number of sub-clusters is a number of sub-poses to be identified in each of the poses. In an implementation, the second predefined number may range from 2 to 10.

Let us consider an example, where the number of sub-poses to be identified is 8. The gait-pose modeler 110 performs K-means clustering method separately over the dynamic feature vectors for the frames associated with each cluster for creating eight sub-clusters in the each cluster. The creation of the sub-clusters within the each cluster is carried out in the same manner as described earlier for the creation of the clusters. The dynamic feature vectors for each sub-cluster of a cluster correspond to one sub-pose that can be identified within a pose in the walking pattern of the individual 104. The data related to pose and sub-pose clusters is stored in the cluster data 220. In an implementation, the clustering may be performed through any clustering method including, but not restricted to, K-means or Fuzzy C-means clustering method.

After the clusters and the sub-clusters are created, the gait-pose modeler 110 determines a gait-pose feature data set. For this, the gait-pose modeler 110 computes a center of the dynamic feature vectors for the frames associated with each sub-cluster within a cluster. The center for a sub-cluster can be represented as a 14-dimensional vector of 14 elements. Thus, for 8 sub-clusters within a cluster, the centers of the dynamic feature vectors for the frames associated with the sub-clusters within the cluster can be represented as 2-D matrix of the order of [8 x 14]. The gait-pose modeler 110 also computes a mean of the static feature vectors for the frames associated with each cluster. The mean of the static feature vectors for the frames associated with a cluster can be represented as a 12-dimensional vector of 12 elements. This mean, computed for each cluster, is appended to the center vector computed for each sub-cluster of that cluster. This gives the data set for each cluster, which can be represented as a 2-D matrix of the order of [8 x (14+12)]. Thus, for 3 clusters, the complete data set for the individual 104 can be represented as a 2-D matrix of the order of [3 x 8 x (14+12)], i.e., [24 x 26]. This data set is referred to as the gait-pose feature data set. In general, the gait-pose feature data set can be represented as a 2-D matrix of order of [(number of poses to be identified in the walking pattern) x (number of sub-poses to be identified in a pose in the walking pattern) x (total number of static gait features representing a pose and a sub-pose + total number of dynamic gait features representing a pose and a sub-pose)]. The data related to the gait-pose feature data is stored in the classifier data 222.

Based on the gait-pose feature data set determined for the individual 104, the identification module 112 trains a classifier with the gait-pose feature data set for the individual 104. The classifier may include a supervised learning algorithm, such as a support vector machine (SVM) classifier with a radial basis function, a naive bayes, a decision tree, a neural network, and the like. The identification module 112 then uses the classifier to identify the individual 104 uniquely in real-time in future.

The gait-pose modeler 110 of the system 102 can determine the gait-pose feature data sets for all the individuals 104 in a similar manner, and the identification module 112 can train the classifier with the gait-pose feature data sets for the individuals 104 to identify them uniquely.

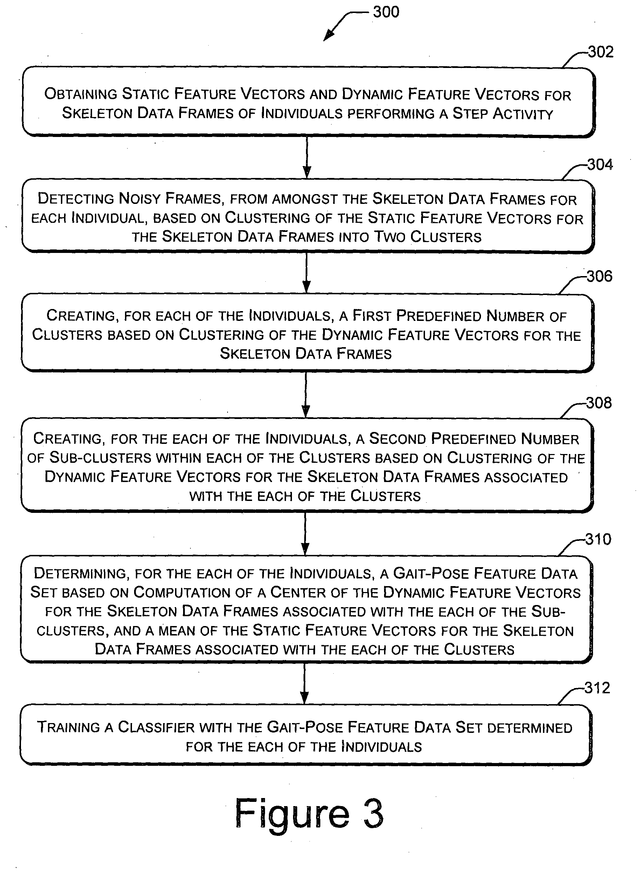

Figure 3 illustrates a method 300 for identification of individuals based on pose and sub-pose clustering, in accordance with an implementation of the present subject matter. The method 300 can be implemented in the people identification system 102. The order in which the method 300 is described is not intended to be construed as a limitation, and any number of the described method blocks can be combined in any order to implement the method 300, or any alternative methods. Additionally, individual blocks may be deleted from the method 300 without departing from the spirit and scope of the subject matter described herein. Furthermore, the method 300 can be implemented in any suitable hardware.

The method 300 may be described in the general context of computer executable instructions. Generally, computer executable instructions can include routines, programs, objects, components, data structures, procedures, modules, functions, etc., that perform particular functions or implement particular abstract data types. Further, although the method 300 may be implemented in any computing device; in an example described in Figure 3, the method 300 is explained in context of the aforementioned people identification system 102, for the ease of explanation.

Referring to Figure 3, at block 302, static feature vectors and dynamic feature vectors for skeleton data frames for individuals 104 are obtained. The static and dynamic feature vectors are obtained by capturing skeleton data points of the individuals 104 using a skeleton recording device 106. The skeleton recording device 106 provides information of skeleton joints in the form of skeleton data frames, hereinafter referred to as frames. The skeleton data points are captured by the skeleton recording device 106 while the individuals 106 are performing a step activity, such as a walking activity, jogging activity, or running activity, with an arbitrary step activity pattern and following a random path. The static and dynamic feature vectors are obtained for a predefined number of frames, for example 3000 frames. Each static feature vector includes multiple static gait features, and each dynamic feature vector includes multiple dynamic gait features, of the individuals 104.

In an implementation, after obtaining the static and dynamic data feature sets from the frames, for each individual 104 noisy frames are detected, at block 304, by clustering the static feature vectors for all the frames into two clusters. As mentioned earlier, the cluster having sparsely distributed points is referred to as a noisy cluster and the points in that cluster represent the static feature vectors of noisy frames. The noisy frames, and the static and dynamic feature vectors of the noisy frames, are not considered for further processing.

At block 306, a first predefined number of clusters are created based on clustering of dynamic feature vectors for the frames for each individual 104.The first predefined number is indicative of number of poses that are to be identified in the activity pattern of the individuals 104. The dynamic feature vectors may be clustered using K-means clustering method or Fuzzy C-means clustering method or any other clustering method, as described earlier in the description. Each cluster, and the dynamic feature vectors corresponding to that cluster, corresponds to one pose that can be identified in the step activity pattern.

Further, at block 308, a second predefined number of sub-clusters are created within each of the clusters based on clustering of dynamic feature vectors for the frames associated with the each cluster. The second predefined number is indicative of number of sub-poses that are to be identified within each pose in the activity pattern of the individuals 104. The dynamic feature vectors may be sub-clustered using K-means clustering method or Fuzzy C-means clustering method or any other clustering method, as described earlier in the description. Each sub-cluster, and the dynamic feature vectors corresponding to that sub-cluster, corresponds to one sub-pose that can be identified within a pose in the step activity pattern.

After clustering and sub-clustering the dynamic feature vectors for each individual 104, a gait-pose feature data set is determined, at block 310. The gait-pose feature data set is determined based on computation of a center of the dynamic feature vectors for the frames associated with each sub-cluster, and a mean of the static feature vectors for the frames associated with each cluster. As described earlier, the gait-pose feature data set is a 2-D matrix of the order of [(number of poses to be identified in the activity pattern) x (number of sub-poses to be identified in a pose in the activity pattern) x (total number of static gait features representing a pose and a sub-pose + total number of dynamic gait features representing a pose and a sub-pose)]. The gait-pose feature data set is unique for each individual 104 and is characterized based on the poses and the sub-poses that define the activity pattern for the step activity performed by the each individual 104. The characterization is done through gait-pose modeling by clustering the gait features extracted for each individual 104.

At block 312, a classifier is trained with the gait-pose feature data set determined for each individual 104. The trained classifier can then be used for identification of individuals uniquely, while they are performing a step activity with any arbitrary pattern and following any random path in any direction.

Although implementations for system(s) and method(s) for identification of individuals are described, it is to be understood that the present subject matter is not necessarily limited to the specific features or methods described. Rather, the specific features and methods are disclosed as implementations to identify individuals uniquely.

## Claims

1. A system (102) for identification of an individual, the system (102) comprising:
a processor (202); and
a gait-pose modeler (110) coupled to the processor (202), to
obtain one or more static feature vectors and one or more dynamic feature vectors for skeleton data frames of the individual performing a step activity, wherein the skeleton data frames comprise skeleton data points containing information about the skeleton joints of the individual;
create, for the individual, a first predefined number of clusters based on clustering of the dynamic feature vectors for the skeleton data frames, wherein the first predefined number is a number of poses to be identified in the step activity;
create, for the individual, a second predefined number of sub-clusters within each of the clusters based on clustering of the dynamic feature vectors for the skeleton data frames associated with each of the clusters, wherein the second predefined number is a number of sub-poses to be identified in the poses; and
determine, for the individual, a gait-pose feature data set based on computation of i) a center of the dynamic feature vectors for the skeleton data frames associated with each of the sub-clusters, and ii) a mean of the static feature vectors for the skeleton data frames associated with each of the clusters for identifying the individual uniquely.

2. The system (102) as claimed in claim 1, wherein the gait-pose modeler (110) creates the clusters based on a predefined clustering method comprising one of K-means clustering method and Fuzzy C-means clustering method.

3. The system (102) as claimed in claim 1, wherein the gait-pose modeler (110) creates the sub-clusters based on a predefined clustering method comprising one of K-means clustering method and Fuzzy C-means clustering method.

4. The system (102) as claimed in claim 1 further comprising a feature extraction module (212) coupled to the processor (202), to
receive the skeleton data frames for the individual from a skeleton recording device (106), and
extract the static feature vectors and the dynamic feature vectors from each of the skeleton data frames received for the individual.

5. The system (102) as claimed in claim 1 further comprising a noise remover (214) coupled to the processor (202), to
detect, for the individual, noisy frames, from amongst the skeleton data frames, based on clustering of the static feature vectors obtained for the skeleton data frames for the individual, wherein the noisy frames are the skeleton data frames in which the static gait features are sparsely distributed; and
remove the noisy frames from the skeleton data frames.

6. The system (102) as claimed in claim 5, wherein, to detect the noisy frames, the noise remover (214)
computes absolute difference values of the static feature vectors of successive skeleton data frames;
performs a histogram analysis for the absolute difference values to populate counts in predefined bins;
determines a first starting center as a data point corresponding to center of a bin having maximum count;
determines a second starting center as a data point corresponding to a static feature vector farthest from the first starting center; and
clusters the static feature vectors into two clusters, based on 2-cluster clustering method performed with the first starting center and the second starting center.

7. The system (102) as claimed in claim 1 further comprising an identification module (112) coupled to the processor (202), to
train a classifier with the gait-pose feature data set determined for the individual, and
identifying the individual uniquely using the classifier.

8. The system (102) as claimed in claim 1, wherein the static feature vectors comprises multiple static gait features comprising a height, a length of both legs, a torso, both lower legs, both thighs, both upper arms, and both fore arms of the individual, and the dynamic feature vectors comprises multiple dynamic gait features comprising a velocity, a step length, one or more area-related features, one or more angle-related features, and one or more dynamic centroid distance-related features.

9. The system of claim 8, wherein the one or more area-related features comprises mean of area occupied by upper body portion and mean of area occupied by lower body portion of the individual, the one or more angle-related features comprises an angle of upper left leg relative to vertical axis, an angle between left foot relative to horizontal axis, an angle of lower left leg relative to the upper left leg, an angle of upper right leg relative to the vertical axis, an angle of right foot relative to the horizontal axis, and an angle of lower right leg relative to the upper right leg, and the one or more dynamic centroid-distance related features comprises a distance between centroid of body and centroids of right hand, left hand, right leg, and left leg.

10. A method for identifying an individual, the method comprising:
obtaining, by a processor (202), static feature vectors and dynamic feature vectors for skeleton data frames of an individual performing a step activity with an arbitrary pattern or in a random path, wherein the skeleton data frames comprise skeleton data points containing information about the skeleton joints of the individual;
creating, by the processor (202), for the individual, a first predefined number of clusters based on clustering of the dynamic feature vectors for the skeleton data frames, wherein the first predefined number is a number of poses to be identified in the step activity;
creating, by the processor (202), for the individual, a second predefined number of sub-clusters within each of the clusters based on clustering of the dynamic feature vectors for the skeleton data frames associated with each of the clusters, wherein the second predefined number is a number of sub-poses to be identified in the poses;
determining, by the processor (202), for the individual, a gait-pose feature data set based on computation of i) a center of the dynamic feature vectors for the skeleton data frames associated with each of the sub-clusters, and ii) a mean of the static feature vectors for the skeleton data frames associated with each of the clusters; and
training, by the processor (202), a classifier with the gait-pose feature data set determined for the individual, for identification of the individual uniquely.

11. The method as claimed in claim 10, wherein the first predefined number of clusters is a number within a range from 2 to 10, and wherein the second predefined number of sub-clusters is a number within a range from 2 to 10.

12. The method as claimed in claim 10, wherein the clustering is based on a predefined clustering methods comprising one of K-means clustering method and Fuzzy C-means clustering method.

13. The method as claimed in claim 10, wherein the obtaining comprises:
receiving the skeleton data frames for the individual from a skeleton recording device (106), and
extracting the static feature vectors and the dynamic feature vectors from each of the skeleton data frames received for the individual.

14. The method as claimed in claim 10 further comprising:
detecting, by the processor (202), for the individual, noisy frames, from amongst the skeleton data frames, based on clustering of the static feature vectors obtained for the skeleton data frames for the individual, wherein the noisy frames are the skeleton data frames in which the static gait features are sparsely distributed; and
removing, by the processor (202), the noisy frames from the skeleton data frames before the clustering.

15. A non-transitory computer readable medium having a set of computer readable instructions that, when executed, cause a computing system to:
obtain static feature vectors and dynamic feature vectors for skeleton data frames of an individual performing a step activity, wherein the skeleton data frames comprise skeleton data points containing information about the skeleton joints of the individual;
create, for the individual, a first predefined number of clusters based on clustering of the dynamic feature vectors for the skeleton data frames, wherein the first predefined number is a number of poses to be identified in the step activity;
create, for the individual, a second predefined number of sub-clusters within each of the clusters based on clustering of the dynamic feature vectors for the skeleton data frames associated with each of the clusters, wherein the second predefined number is a number of sub-poses to be identified in the poses; and
determine, for the individual, a gait-pose feature data set based on computation of i) a center of the dynamic feature vectors for the skeleton data frames associated with each of the sub-clusters, and ii) a mean of the static feature vectors for the skeleton data frames associated with each of the clusters for identifying the individual uniquely.

## Patentansprüche

1. System (102) zur Identifikation eines Individuums, wobei das System (102) Folgendes umfasst:
einen Prozessor (202); und
einen mit dem Prozessor (202) gekoppelten Gangart-Posen-Modellierer (110) zum
Erhalten eines oder mehrerer statischer Merkmalvektoren und eines oder mehrerer dynamischer Merkmalvektoren für Skelettdatenrahmen eines Individuums, das eine Schrittaktivität ausführt, wobei die Skelettdatenrahmen Skelettdatenpunkte umfassen, die Informationen über die Skelettgelenke des Individuums enthalten;
Erzeugen einer ersten vordefinierten Anzahl von Clustern für das Individuum auf der Basis einer Clusterung der dynamischen Merkmalvektoren für die Skelettdatenrahmen, wobei die vordefinierte Anzahl eine Anzahl von bei der Schrittaktivität zu identifizierenden Posen ist;
Erzeugen einer zweiten vordefinierten Anzahl von Subclustern in jedem der Cluster für das Individuum auf der Basis einer Clusterung der dynamischen Merkmalvektoren für die jedem der Cluster zugeordneten Skelettdatenrahmen, wobei die zweite vordefinierte Anzahl eine Anzahl von in den Posen zu identifizierenden Subposen ist; und
Bestimmen einer Gangart-Posen-Merkmaldatenmenge für das Individuum auf der Basis von Berechnung (i) einer Mitte der dynamischen Merkmalvektoren für die jedem der Subcluster zugeordneten Skelettdatenrahmen und (ii) eines Mittelwerts der statischen Merkmalvektoren für die jedem der Cluster zugeordneten Skelettdatenrahmen zum eindeutigen Identifizieren des Individuums.

2. System (102) nach Anspruch 1, wobei der Gangart-Posen-Modellierer (110) die Cluster auf der Basis eines vordefinierten Clusterungsverfahrens erzeugt, das ein K-Mittelwert-Clusterungsverfahren oder ein Fuzzy-C-Mittelwert-Clusterungsverfahren umfasst.

3. System (102) nach Anspruch 1, wobei der Gangart-Posen-Modellierer (110) die Subcluster auf der Basis eines vordefinierten Clusterungsverfahrens erzeugt, das ein K-Mittelwert-Clusterungsverfahren oder ein Fuzzy-C-Mittelwert-Clusterungsverfahren umfasst.

4. System (102) nach Anspruch 1, das ferner ein mit dem Prozessor (202) gekoppeltes Merkmalextraktionsmodul (212) umfasst zum
Empfangen der Skelettdatenrahmen für das Individuum von einer Skelettaufzeichnungsvorrichtung (106) und
Extrahieren der statischen Merkmalvektoren und der dynamischen Merkmalvektoren aus jedem der für das Individuum empfangenen Skelettdatenrahmen.

5. System (102) nach Anspruch 1, das ferner eine mit dem Prozessor (202) gekoppelte Rauschentfernungsvorrichtung (214) umfasst zum
Detektieren von rauschbehafteten Rahmen für das Individuum aus den Skelettdatenrahmen auf der Basis einer Clusterung der für die Skelettdatenrahmen für das Individuum erhaltenen statischen Merkmalvektoren, wobei die rauschbehafteten Rahmen die Skelettdatenrahmen sind, in denen die statischen Gangartmerkmale spärlich verteilt sind; und
Entfernen der rauschbehafteten Rahmen aus den Skelettdatenrahmen.

6. System (102) nach Anspruch 5, wobei zur Detektion der rauschbehafteten Rahmen die Rauschentfernungsvorrichtung (214)
Absolutdifferenzwerte der statischen Merkmalvektoren sukzessiver Skelettdatenrahmen berechnet;
eine Histogrammanalyse für die Absolutdifferenzwerte durchführt, um Zählwerte in vordefinierten Bins einzutragen;
eine erste Startmitte als Datenpunkt entsprechend der Mitte eines Bins mit maximalem Zählwert bestimmt;
eine zweite Startmitte als einen Datenpunkt entsprechend einem statischen Merkmalvektor bestimmt, der am weitesten von der ersten Startmitte liegt; und
die statischen Merkmalvektoren auf der Basis eines mit der ersten Startmitte und der zweiten Startmitte ausgeführten 2-Cluster-Clusterungsverfahrens in zwei Cluster clustert.

7. System (102) nach Anspruch 1, das ferner ein mit dem Prozessor (202) gekoppeltes Identifikationsmodul (112) umfasst zum
Trainieren eines Klassifizierers mit der für das Individuum bestimmten Gangart-Posen-Merkmaldatenmenge und
eindeutigen Identifizieren des Individuums unter Verwendung des Klassifizierers.

8. System (102) nach Anspruch 1, wobei die statischen Merkmalvektoren mehrere statische Gangartmerkmale umfassen, die eine Höhe, eine Länge beider Beine, einen Torso, beide Unterschenkel, beide Oberschenkel, beide Oberarme und beide Unterarme des Individuums umfassen, und die dynamischen Merkmalvektoren mehrere dynamische Gangartmerkmale umfassen, die eine Geschwindigkeit, eine Schrittlänge, ein oder mehrere flächenbezogene Merkmale, ein oder mehrere winkelbezogene Merkmale und ein oder mehrere dynamische Schwerpunkt-Distanzbezogene Merkmale umfassen.

9. System nach Anspruch 8, wobei das eine oder die mehreren flächenbezogenen Merkmale den Mittelwert der durch den Oberkörperteil eingenommenen Fläche und den Mittelwert der durch den Unterkörperteil des Individuums eingenommenen Fläche umfassen, das eine oder die mehreren winkelbezogenen Merkmale einen Winkel eines linken Oberschenkels relativ zur vertikalen Achse, einen Winkel zwischen dem linken Fuß relativ zur horizontalen Achse, einen Winkel des linken Unterschenkels relativ zum linken Oberschenkel, einen Winkel des rechten Oberschenkels relativ zur vertikalen Achse, einen Winkel des rechten Fußes relativ zur horizontalen Achse und einen Winkel des rechten Unterschenkels relativ zum rechten Oberschenkel umfassen und das eine oder die mehreren dynamischen Schwerpunkt-Distanz-bezogenen Merkmale eine Distanz zwischen dem Schwerpunkt des Körpers und Schwerpunkten der rechten Hand, der linken Hand, des rechten Beins und des linken Beins umfassen.

10. Verfahren zum Identifizieren eines Individuums, wobei das Verfahren Folgendes umfasst:
Erhalten von statischen Merkmalvektoren und dynamischen Merkmalvektoren für Skelettdatenrahmen eines Individuums, das eine Schrittaktivität mit einem willkürlichen Muster oder in einem Zufallspfad ausführt, durch einen Prozessor (202), wobei die Skelettdatenrahmen Skelettdatenpunkte umfassen, die Informationen über die Skelettgelenke des Individuums enthalten;
Erzeugen einer ersten vordefinierten Anzahl von Clustern für das Individuum auf der Basis einer Clusterung der dynamischen Merkmalvektoren für die Skelettdatenrahmen durch den Prozessor (202), wobei die erste vordefinierte Anzahl eine Anzahl von bei der Schrittaktivität zu identifizierenden Posen ist;
Erzeugen einer zweiten vordefinierten Anzahl von Subclustern in jedem der Cluster für das Individuum auf der Basis einer Clusterung der dynamischen Merkmalvektoren für die jedem der Cluster zugeordneten Skelettdatenrahmen durch den Prozessor (202), wobei die zweite vordefinierte Anzahl eine Anzahl von in den Posen zu identifizierenden Subposen ist;
Bestimmen einer Gangart-Posen-Merkmaldatenmenge durch den Prozessor (202) für das Individuum auf der Basis von Berechnung (i) einer Mitte der dynamischen Merkmalvektoren für die jedem der Subcluster zugeordneten Skelettdatenrahmen und (ii) eines Mittelwerts der statischen Merkmalvektoren für die jedem der Cluster zugeordneten Skelettdatenrahmen; und
Trainieren eines Klassifizierers durch den Prozessor (202) mit der Gangart-Posen-Merkmaldatenmenge, die für das Individuum bestimmt wird, zur eindeutigen Identifikation des Individuums.

11. Verfahren nach Anspruch 10, wobei die erste vordefinierte Anzahl von Clustern eine Zahl in einem Bereich von 2 bis 10 ist und wobei die zweite vordefinierte Anzahl von Subclustern eine Zahl in einem Bereich von 2 bis 10 ist.

12. Verfahren nach Anspruch 10, wobei die Clusterung auf einem vordefinierten Clusterungsverfahren basiert, das ein K-Mittelwert-Clusterungsverfahren oder ein Fuzzy-C-Mittelwert-Clusterungsverfahren umfasst.

13. Verfahren nach Anspruch 10, wobei das Erhalten Folgendes umfasst:
Empfangen der Skelettdatenrahmen für das Individuum von einer Skelettaufzeichnungsvorrichtung (106) und
Extrahieren der statischen Merkmalvektoren und der dynamischen Merkmalvektoren aus jedem der für das Individuum empfangenen Skelettdatenrahmen.

14. Verfahren nach Anspruch 10, ferner umfassend:
Detektieren von rauschbehafteten Rahmen für das Individuum aus den Skelettdatenrahmen auf der Basis einer Clusterung der für die Skelettdatenrahmen für das Individuum erhaltenen statischen Merkmalvektoren durch den Prozessor (202), wobei die rauschbehafteten Rahmen die Skelettdatenrahmen sind, in denen die statischen Gangartmerkmale spärlich verteilt sind; und
Entfernen der rauschbehafteten Merkmale aus den Skelettdatenrahmen durch den Prozessor (202) vor der Clusterung.

15. Nichtflüchtiges computerlesbares Medium mit einer Menge von computerlesbaren Anweisungen, die, wenn sie ausgeführt werden, bewirken, dass ein Datenverarbeitungssystem Folgendes durchführt:
Erhalten von statischen Merkmalvektoren und dynamischen Merkmalvektoren für Skelettdatenrahmen eines Individuums, das eine Schrittaktivität ausführt, wobei die Skelettdatenrahmen Skelettdatenpunkte umfassen, die Informationen über die Skelettgelenke des Individuums enthalten;
Erzeugen einer ersten vordefinierten Anzahl von Clustern für das Individuum auf der Basis einer Clusterung der dynamischen Merkmalvektoren für die Skelettdatenrahmen, wobei die erste vordefinierte Anzahl eine Anzahl von bei der Schrittaktivität zu identifizierenden Posen ist;
Erzeugen einer zweiten vordefinierten Anzahl von Subclustern in jedem der Cluster für das Individuum auf der Basis einer Clusterung der dynamischen Merkmalvektoren für die jedem der Cluster zugeordneten Skelettdatenrahmen, wobei die zweite vordefinierte Anzahl eine Anzahl von in den Posen zu identifizierenden Subposen ist; und
Bestimmen einer Gangart-Posen-Merkmaldatenmenge für das Individuum auf der Basis von Berechnung (i) einer Mitte der dynamischen Merkmalvektoren für die jedem der Subcluster zugeordneten Skelettdatenrahmen und (ii) eines Mittelwerts der statischen Merkmalvektoren für die jedem der Cluster zugeordneten Skelettdatenrahmen zum eindeutigen Identifizieren des Individuums.

## Revendications

1. Système (102) d'identification d'un individu, le système (102) comprenant :
un processeur (202) ; et
un modélisateur de posture / démarche (110) couplé au processeur (202), pour :
obtenir un ou plusieurs vecteurs de caractéristiques statiques et un ou plusieurs vecteurs de caractéristiques dynamiques pour des trames de données de squelette de l'individu effectuant une activité de marche, dans lequel les trames de données de squelette comprennent des points de données de squelette contenant des informations sur les articulations de squelette de l'individu ;
créer, pour l'individu, un premier nombre prédéfini de regroupements sur la base d'un regroupement des vecteurs de caractéristiques dynamiques pour les trames de données de squelette, dans lequel le premier nombre prédéfini est un nombre de postures devant être identifiées dans le cadre de l'activité de marche ;
créer, pour l'individu, un second nombre prédéfini de sous-regroupements au sein de chacun des regroupements sur la base d'un regroupement des vecteurs de caractéristiques dynamiques pour les trames de données de squelette associées à chacun des regroupements, dans lequel le second nombre prédéfini est un nombre de sous-postures devant être identifiées dans les postures ; et
déterminer, pour l'individu, un ensemble de données de caractéristiques de posture / démarche sur la base d'un calcul de i) un centre des vecteurs de caractéristiques dynamiques pour les trames de données de squelette associées à chacun des sous-regroupements, et ii) une moyenne des vecteurs de caractéristiques statiques pour les trames de données de squelette associées à chacun des regroupements, en vue d'identifier l'individu de manière unique.

2. Système (102) selon la revendication 1, dans lequel le modélisateur de posture / démarche (110) crée les regroupements sur la base d'un procédé de regroupement prédéfini comprenant l'un parmi un procédé de regroupement par la méthode des K moyennes et un procédé de regroupement par la méthode des C moyennes floues.

3. Système (102) selon la revendication 1, dans lequel le modélisateur de posture / démarche (110) crée les sous-regroupements sur la base d'un procédé de regroupement prédéfini comprenant l'un parmi un procédé de regroupement par la méthode des K moyennes et un procédé de regroupement par la méthode des C moyennes floues.

4. Système (102) selon la revendication 1, comprenant en outre un module d'extraction de caractéristiques (212) couplé au processeur (202), pour :
recevoir les trames de données de squelette pour l'individu, en provenance d'un dispositif d'enregistrement de squelette (106) ; et
extraire les vecteurs de caractéristiques statiques et les vecteurs de caractéristiques dynamiques de chacune des trames de données de squelette reçues pour l'individu.

5. Système (102) selon la revendication 1, comprenant en outre un suppresseur de bruit (214) couplé au processeur (202), pour :
détecter, pour l'individu, des trames bruitées, parmi les trames de données de squelette, sur la base d'un regroupement des vecteurs de caractéristiques statiques obtenus pour les trames de données de squelette pour l'individu, dans lequel les trames bruitées sont les trames de données de squelette dans lesquelles les caractéristiques de démarche statiques sont réparties de manière éparse ; et
supprimer les trames bruitées des trames de données de squelette.

6. Système (102) selon la revendication 5, dans lequel, pour détecter les trames bruitées, le suppresseur de bruit (214) :
calcule des valeurs de différence absolue des vecteurs de caractéristiques statiques de trames de données de squelette successives ;
met en oeuvre une analyse d'histogramme pour les valeurs de différence absolue afin de remplir des comptages dans des emplacements prédéfinis ;
détermine un premier centre de départ en tant qu'un point de données correspondant au centre d'un emplacement présentant un comptage maximal ;
détermine un second centre de départ en tant qu'un point de données correspondant à un vecteur de caractéristique statique le plus éloigné du premier centre de départ ; et
regroupe les vecteurs de caractéristiques statiques en deux regroupements, sur la base d'un procédé de regroupement à deux regroupements mis en oeuvre avec le premier centre de départ et le second centre de départ.

7. Système (102) selon la revendication 1, comprenant en outre un module d'identification (112) couplé au processeur (202), pour :
entrainer un classificateur à l'aide de l'ensemble de données de caractéristiques de posture / démarche déterminé pour l'individu ; et
identifier l'individu de manière unique en faisant appel au classificateur.

8. Système (102) selon la revendication 1, dans lequel les vecteurs de caractéristiques statiques comprennent de multiples caractéristiques de démarche statiques comprenant une hauteur, une longueur des deux jambes, un torse, les deux jambes, les deux cuisses, les deux bras et les deux avant-bras de l'individu, et les vecteurs de caractéristiques dynamiques comprennent plusieurs caractéristiques de démarche dynamiques comprenant une vitesse, une longueur de pas, une ou plusieurs caractéristiques connexes à une surface, une ou plusieurs caractéristiques connexes à un angle, et une ou plusieurs caractéristiques dynamiques connexes à une distance du centre de gravité.

9. Système selon la revendication 8, dans lequel ladite une ou lesdites plusieurs caractéristiques connexes à une surface comprennent une moyenne de la surface occupée par une partie corporelle supérieure et une moyenne de la surface occupée par une partie corporelle inférieure de l'individu, ladite une ou lesdites plusieurs caractéristiques connexes à un angle comprennent un angle de la jambe supérieure gauche par rapport à l'axe vertical, un angle entre le pied gauche et l'axe horizontal, un angle de la jambe inférieure gauche par rapport au pied supérieur gauche, un angle de la jambe supérieure droite par rapport à l'axe vertical, un angle du pied droit par rapport à l'axe horizontal, et un angle de la jambe inférieure droite par rapport à la jambe supérieure droite, et ladite une ou lesdites plusieurs caractéristiques dynamiques connexes à une distance du centre de gravité comprennent une distance entre la centre de gravité du corps et les centres de gravité de la main droite, de la main gauche, de la jambe droite et de la jambe gauche.

10. Procédé d'identification d'un individu, le procédé comprenant les étapes ci-dessous consistant à :
obtenir, par le biais d'un processeur (202), des vecteurs de caractéristiques statiques et des vecteurs de caractéristiques dynamiques pour des trames de données de squelette d'un individu effectuant une activité de marche, avec un motif arbitraire ou sur un trajet aléatoire, dans lequel les trames de données de squelette comprennent des points de données de squelette contenant des informations sur les articulations de squelette de l'individu ;
créer, par le biais du processeur (202), pour l'individu, un premier nombre prédéfini de regroupements sur la base d'un regroupement des vecteurs de caractéristiques dynamiques pour les trames de données de squelette, dans lequel le premier nombre prédéfini est un nombre de postures devant être identifiées dans le cadre de l'activité de marche ;
créer, par le biais du processeur (202), pour l'individu, un second nombre prédéfini de sous-regroupements au sein de chacun des regroupements sur la base d'un regroupement des vecteurs de caractéristiques dynamiques pour les trames de données de squelette associées à chacun des regroupements, dans lequel le second nombre prédéfini est un nombre de sous-postures devant être identifiées dans les postures ; et
déterminer, par le biais du processeur (202), pour l'individu, un ensemble de données de caractéristiques de posture / démarche sur la base d'un calcul de i) un centre des vecteurs de caractéristiques dynamiques pour les trames de données de squelette associées à chacun des sous-regroupements, et ii) une moyenne des vecteurs de caractéristiques statiques pour les trames de données de squelette associées à chacun des regroupements, en vue d'identifier l'individu de manière unique ; et
entrainer, par le biais du processeur (202), un classificateur, à l'aide de l'ensemble de données de caractéristiques de posture / démarche déterminé pour l'individu, en vue d'identifier l'individu de manière unique.

11. Procédé selon la revendication 10, dans lequel le premier nombre prédéfini de regroupements est un nombre compris dans une plage allant de 2 à 10, et dans lequel le second nombre prédéfini de sous-regroupements est un nombre compris dans une plage allant de 2 à 10.

12. Procédé selon la revendication 10, dans lequel l'étape de regroupement est basée sur un procédé de regroupement prédéfini comprenant l'un parmi un procédé de regroupement par la méthode des K moyennes et un procédé de regroupement par la méthode des C moyennes floues.

13. Procédé selon la revendication 10, dans lequel l'étape d'obtention comprend les étapes ci-dessous consistant à :
recevoir les trames de données de squelette pour l'individu, en provenance d'un dispositif d'enregistrement de squelette (106) ; et
extraire les vecteurs de caractéristiques statiques et les vecteurs de caractéristiques dynamiques de chacune des trames de données de squelette reçues pour l'individu.

14. Procédé selon la revendication 10, comprenant en outre les étapes ci-dessous consistant à :
détecter, par le biais du processeur (202), pour l'individu, des trames bruitées, parmi les trames de données de squelette, sur la base d'un regroupement des vecteurs de caractéristiques statiques obtenus pour les trames de données de squelette pour l'individu, dans lequel les trames bruitées sont les trames de données de squelette dans lesquelles les caractéristiques de démarche statiques sont réparties de manière éparse ; et
supprimer, par le biais du processeur (202), les trames bruitées des trames de données de squelette avec le regroupement.

15. Support lisible par ordinateur non transitoire présentant un ensemble d'instructions lisibles par ordinateur qui, lorsqu'elles sont exécutées, amènent un système informatique à :
obtenir des vecteurs de caractéristiques statiques et des vecteurs de caractéristiques dynamiques pour des trames de données de squelette d'un individu effectuant une activité de marche, dans lequel les trames de données de squelette comprennent des points de données de squelette contenant des informations sur les articulations de squelette de l'individu ;
créer, pour l'individu, un premier nombre prédéfini de regroupements sur la base d'un regroupement des vecteurs de caractéristiques dynamiques pour les trames de données de squelette, dans lequel le premier nombre prédéfini est un nombre de postures devant être identifiées dans le cadre de l'activité de marche ;
créer, pour l'individu, un second nombre prédéfini de sous-regroupements au sein de chacun des regroupements sur la base d'un regroupement des vecteurs de caractéristiques dynamiques pour les trames de données de squelette associées à chacun des regroupements, dans lequel le second nombre prédéfini est un nombre de sous-postures devant être identifiées dans les postures ; et
déterminer, pour l'individu, un ensemble de données de caractéristiques de posture / démarche sur la base d'un calcul de i) un centre des vecteurs de caractéristiques dynamiques pour les trames de données de squelette associées à chacun des sous-regroupements, et ii) une moyenne des vecteurs de caractéristiques statiques pour les trames de données de squelette associées à chacun des regroupements, en vue d'identifier l'individu de manière unique.
